Europäisches Patentamt

European Patent Office

Office européen des brevets

(11) Publication number: **0 424 083 A1**

# EUROPEAN PATENT APPLICATION

(21) Application number: 90311310.8

(22) Date of filing: 16.10.90

(51) Int. Cl.5: **B60P 3/20**, B60P 7/08

(30) Priority: 18.10.89 GB 8923458

(43) Date of publication of application:
24.04.91 Bulletin 91/17

(84) Designated Contracting States:
BE DE DK ES FR GB IT NL

(71) Applicant: YORK TRAILER COMPANY LIMITED
Yafforth Road
Northallerton North Yorkshire, DL7 8UD(GB)

(72) Inventor: Endelin, Claude

42 Ter, Route de Macon
F-71450 Blanzy(FR)
Inventor: Reynolds, Stephen John
14 Wnydways Drive, Dipton
Stanley, Co Durham DH9 9JQ(GB)

(74) Representative: Allen, Oliver John Richard et al
Lloyd Wise, Tregear & Co. Norman House
105-109 Strand
London, WC2R 0AE(GB)

(54) Improvements in and relating to cargo restraint in refrigerated vehicles or containers.

(57) A refrigerated vehicle or container body of the type formed from panels (2) of insulative material is described. The body has anchorage means secured thereto with two members (12, 14), one of which (14) is secured to the interior of the body (2) to one or more of the panels across a recess (18) therein. The second member (14) is secured to the insulating material in the region of the recess (18) and to the first member (12). Load restraint members can be attached to the first member, space being provided for the heads thereof by the recess. The load restraint means minimally intrudes into the load-carrying space of the body.

Fig.1.

This invention relates to refrigerated vehicles such as vans, lorries, trailers and semi-trailers and refrigerated containers used for carrying fresh, chilled or frozen foodstuffs, or other goods whose temperature must be controlled and in particular to the provision of cargo control anchorage points for such vehicles and containers.

Vehicles and containers for the transport of goods whose temperature needs to be maintained at or around a certain level are well known. The bodies of such vehicles and containers are often formed from panels of insulative material, such as expanded polyvinyl chloride, the panels being protected by skins adhered thereto, on one or both sides, of metal or plywood.

It is important to restrain the cargo carried in vehicles or containers, especially when the load carrying space is only partially filled, to prevent movement of the cargo during transportation which could lead to damage both of the cargo and of the vehicle or container body. Straps or nets are normally employed to hold the cargo in place.

In one know arrangement anchorage tracks are provided along the sidewalls and/or the roof of the body . These are generally of "top hat" section, that is, they have flanges, which are secured to the body by rivets, and a raised centre section which has holes therein for receiving hooks attached to the restraint straps or nets. The need to raise the centre section to provide space between in and the body for the head of the hook means that the anchorage track intrudes into the load carrying space so reducing its capacity. Moreover the anchorage tracks provide a series of projections against which cargo may snag and be damaged. Furthermore the rivets damage the panels and skin and moisture can seep into the insulation via the rivets.

One solution to this problem which has been suggested is to reduce the thickness of the body in the region where the anchorage is to be secured by reducing the thickness of the panel of insulating material in that region, so that the upper surface of the centre portion of the anchorage track is approximatley flush with the interior surface of the remainder of the body. However this arrangement has been found to have disadvantages in that, firstly, the loss of insulative material in the region has been found to have a significant effect on the insulation of the body, that is, there is a tendency of heat transfer in the region. Secondly, it is expensive since the interior skin has to be specially shaped.

Both arrangements further suffer from the problem that there is a tendency for the anchorage tracks to pull out of the walls and/or roof of the body. Either the rivets pull out completely leaving holes in the skin and the insulative material or, more commonly, the strength of the connection between the track and skin is greater than that of the adhesive bond between the skin and the insulative material and the skin is pulled away with the track.

A refrigerated vehicle or container body at least part of which is formed from panels of insulating material in accordance with the invention has at least one anchorage means secured thereto comprising two members, a first member, to which load restraint members may be attached, secured to the interior of the body to one or more panels across a recess in the insulating material and a second member secured to the insulating material in the region of the recess and to the first member.

The panels of insulating material may have a skin attached to both sides and, very preferably, the arrangement is such that a section of the skin adjacent the recess is secured between the two members of the anchorage means.

The anchorage means obviates the problems found with known arrangements. The first member, to which the restraint members can be attached, does not need to be formed with a raised section since the recess provides the necessary space for the hooks etc of, the restraint members. Accordingly it may be made in the form of a flat plate, with holes therein for receiving the hooks, so that it will only - intrude into the load-carrying space of the vehicle or container. The recess only has to be of sufficient size to receive the hook heads therefore the reduction of insulative material in the region where the anchorage means is attached is small and much less than when the full width of a cargo tracks is to be accommodated in the recessed section as in the suggested arrangement described above.

Furthermore, it has been found that the strength of the connection of the anchorage means to the body is extremely high due to the attachment to both the skin and to the insulative material in the region of the recess. In fact it has been found to be greater than the breaking strength of a standard load restraint strap.

Preferably, the first member includes two lugs which extend into the recess and are received in slots provided in the second member. The lugs and/or the walls of the slots may be formed with grooves. The two members are connected by securing the lugs in the slots with adhesive and the grooves serve to ensure good flow of adhesive and bonding between the parts.

The ends of the lugs may be dimensioned and shaped so that they form an interference fit with the walls of the slots. This means that the two members do not have to be held while the adhesive employed to attach them, sets.

A sheet of rubber or other flexible material can be positioned between the lugs and slots and/or the first member and the skin and bonded to both with adhesive. For some adhesives this helps ensure good even bonding of the parts.

The second member may comprise one portion shaped to locate in the recess and two, suitably integral, flanges secured between the skin and the surface of the insulative material adjacent the recess. The surfaces of the flanges which are secured to the skin, preferably by adhesive, are formed with grooves to ensure good bonding. The portions of the first member which are secured to the skin may also be grooved for the same reason.

The second member covers all the surfaces of the panel of inslulative material exposed by forming the recess and so prevents ingress of moisture in the region. The second member may be of "top-hat" section and have a wall extending from the inner surface of the raised section parallel and adjacent to each of the portion connecting this to the flanges to define the slots by which the second member is connected to the first member.

The anchorage means may be made from a metal or metal alloy, preferably aluminium.

In accordance with the invention a method of providing load restraint member attachment points on part of a refrigerated vehicle or container, which part is formed from one or more panels of insulative material, by attaching an anchorage means thereto, the anchorage means comprising a first member to which load restraint members may be attached and a second member, comprises forming a recess in the panel(s), securing the second member to the panel(s) in the region of the recess with adhesive, securing a skin to the panel(s) around the recess with adhesive, securing the first member to the second member and/or the skin across the recess with adhesive, supporting the panel(s) on a table, covering the panel(s) with a blanket and applying a vacuum below the blanket.

The panels of refrigerated vehicles and containers are often manufactured by assembling the parts with adhesive therebetween on a vacuum table, covering the assembly with a blanket and applying a vacuum below the blanket. The anchorage means can be very conveniently formed as part of this operation.

The invention will now be further described by way of example with reference to the accompanying drawings in which:

Figure 1 is a sectional view of part of a refrigerated vehicle or container body having an anchorage means in accordance with the invention;

Figure 2 is a similar view to Figure 1 but showing another embodiment of the refrigerated vehicle or container body;

Figure 3 is an exploded view the anchorage means and body of Figure 1;

Figure 4 is an enlarged view of an alternative embodiment of one member of the anchorage means showing in Figures 1 to 3 and

Figure 5 is a schematic view illustrating a method for constructing the body part shown in Figure 1.

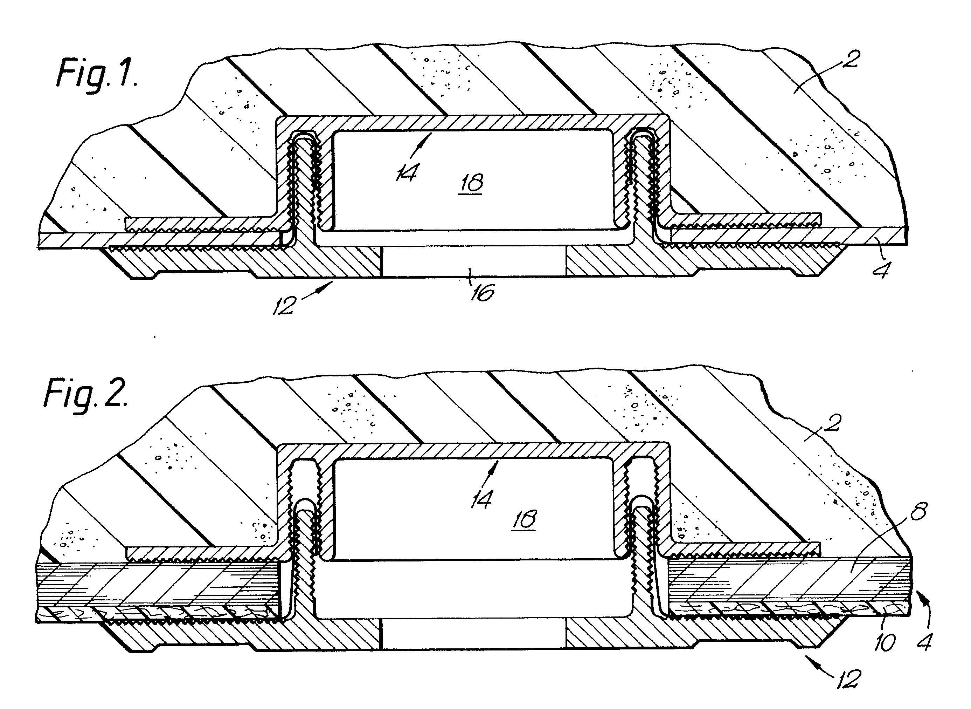

Refrigerated vehicle and container bodies are formed from panels of insulating material. A part of such a panel 2 is shown in Figures 1, 2 and 5. The panel 2 is provided with a skin 4, 6 on both surfaces. The insulating material from which the panel 2 is formed may be, for example, expanded polyvinyl chloride or polyurethane. The skins 4,6 may be formed from a metal, metal alloy or plywood which may be coated with a plastics material to waterproof it or the skins may be formed from a reinforced plastics material.

Alternatively, as illustrated in figure 2, the skins 4, 6 may comprise two layers 8, 10 for example, a layer 8 of plywood and a layer 10 of glass reinforced polyester.

To provide an attachment point for load restraint members, one or more anchorage means are secured to each of the side walls of the vehicle or container body and in some cases to the roof as well. The anchorage means comprise two members 12, 14. The first member 12 has holes 16 therein for receiving hooks provided on the load restraint members. The member 12 is secured across a recess 18 in the panel 2, the skin 4 having an aligned aperture which provides space for the heads of the hooks of the load restraint members.

The second member 14 is of "top-hat" section, that is, it has two axially aligned flanges 20, a central section 22 parallel thereto but transversely spaced therefore and connecting portions 24. A wall 26 extends from the central section 22 parallel each to each connecting portion 24 to define two slots 28. The second member 14 is secured to the panel 2 with adhesive, the central portion 22 and connecting portions 24 serving to line the recess 18 and the flanges 2w, sitting in grooves 29 provided either side of the recess 18 so that no part of the second member 14 protrudes above the surface of the panel 2. The flanges 20 are also connected to the skin 4 by adhesive, their upper surface being grooved to ensure good flow of the adhesive and therefore good bonding.

The second member 14 thus lines the recess 18 and prevents any moisture from seeping into the panel 2 from this region.

The first member 12 also has flanges 30 which are secured by adhesive, to the other side of the skin 4, the contacting surfaces of the flanges 30 being grooved to give good bonding. The lugs 32 extend from the first member 12 into the recess 18 and are received in the slots 28. The lugs 32 are connected in the slots 28 by adhesive, the contacting surfaces being grooved to ensure good bonding.

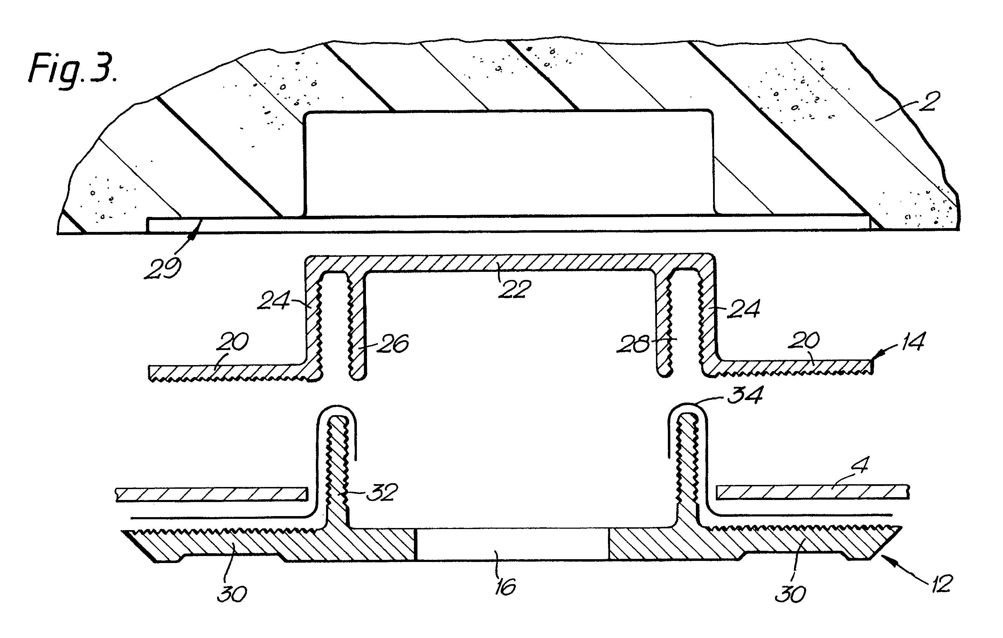

With some adhesives, bonding is improved by positioning a sheet of rubber between the two parts to be connected. The flexible rubber ensures that adhesive reaches all surfaces. As shown in Figure 3 and sheet 34 may be positioned across each flange 30 and the adjacent lug 32 of the first member 12 to improve bonding of the first member 12 to the skin 4 and the second member 14.

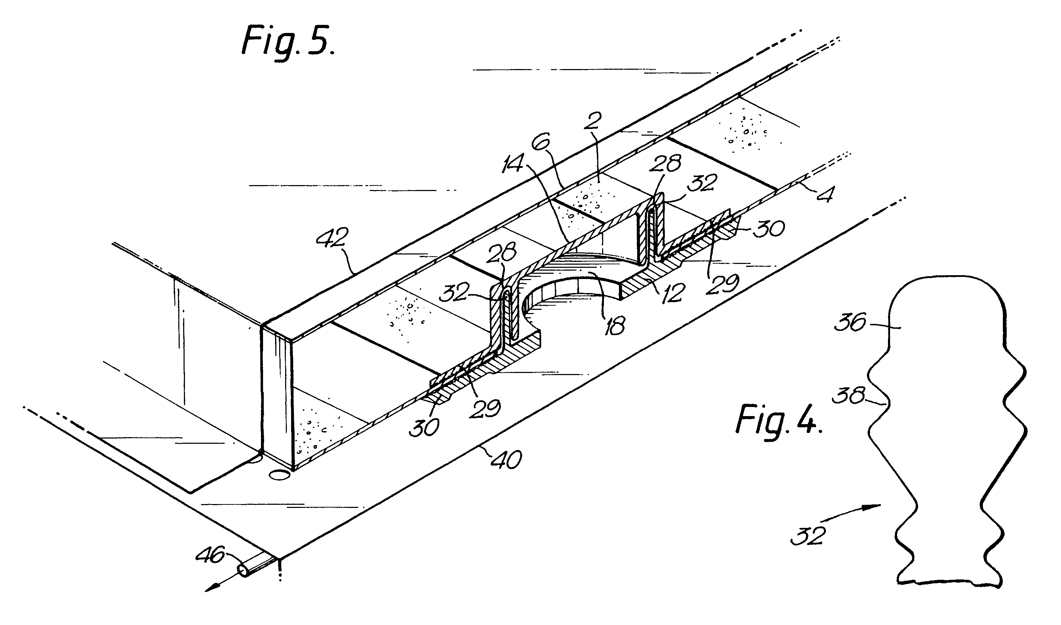

The lugs 32 may be formed with an enlarged head 36 as shown in Figure 4 with at least one groove 38 on either side of the same dimensions as the grooves on the slots 28. The heads 36 will then form an interference fit with the slots 28 when the first and second members 12, 14 are joined. This interference fit serves to hold the two members 12, 14 together in the correct orientation while the adhesive between them sets.

The members of anchorage means are preferably formed from extruded aluminium.

The anchorage means can be provided in a panel during manufacture of the panel as illustrated in Figure 5. The panel of insulating material 2 is machined to provide an appropriately dimensioned recess 18 and pair of grooves 29 and a second member 14 is fitted in place. A skin 4 coated with adhesive is attached on either side of the recess and a first member 12 with adhesive on its flanges 30 and lugs 32 is placed on top of the skin 4 over the recess with its lugs 32 locating in the slots 28 of the second member 14. Finally a second skin 6 is attached to the other side of the panel 2 by adhesive. The assembly is placed on a vacuum table 40 and covered by a vacuum blanker 42. A vacuum is applied beneath the blanket 42 by connecting pipe 46 to a vacuum source. This forces all the parts together to ensure that they are securely connected.

The panel with attached skins and anchorage means thus produced, can be employed as part of the walls or roof of a refrigerated vehicle or container. In many cases, a single panel is employed as the wall or roof of a refrigerated vehicle or container, in which case the length of the anchorage means is equal to the length of the load-carrying space.

The connection between the anchorage means and the panel/skin is very strong, much stronger than in know arrangements and the panel is not damaged by the attachment of the anchorage means as it is when cargo tracks are connected by rivets. The bonding of both members of the anchorage means to the skin makes the skin effectively continuous. Furthermore the region where the skin is not present, over the recess, is protected by the second member.

The intrusion of the anchorage means into the load-carrying space is only minimal and this minimal intrusion is achieved without significant loss of insulation since the recess only has to be large enough for the hook heads. In the suggested arrangement where the thickness of the panel is reduced in one region and a cargo control track was secured in that region, the width of the region has to be sufficient to accommodate the flanges of the cargo control track. This is not the case with the arrangement described herein so the reduction in insulation effect is only minimal.

## Claims

1. A refrigerated vehicle or container body at least part of which is formed from panels of insulative material having at least one anchorage means secured thereto comprising two members, a first member, to which load restraint members may be attached, secured to the interior of the body to one or more panels across a recess in the insulating material and a second member secured to the insulating material in the region of the recess and to the first member.

2. A refrigerated vehicle or container as claimed in Claim 1 wherein the panels of insulating material have a skin attached to the surface thereof which forms the interior of the body, a section of the skin adjacent the recess being secured between the two anchorage means members.

3. A refrigerated vehicle or container as claimed in either Claim 1 or Claim 2 wherein the first member includes two lugs which extend into the recess and are received in slots provided in the second member.

4. A refrigerated vehicle or container as claimed in Claim 3 wherein the lugs of the first member are so dimensioned and shaped that they form an interference fit with the slots of the second member.

5. A refrigerated vehicle or container as claimed in any preceding claim wherein the first member, second member and the panel(s) to which the anchorage means is secured are interconnected by adhesive.

6. A refrigerated vehicle or container as claimed in any preceding claim wherein the surfaces of the first and/or second members which are in contact with the other member and/or the panel(s), to which the anchorage means are attached, are formed with grooves.

7. A refrigerated vehicle or container as claimed in any preceding claim wherein a sheet of flexible material is provided between interconnecting portions of the first member and/or the second member and/or the panel(s) to which the anchorage means is secured.

8. A refrigerated vehicle or container as claimed in any preceding claim wherein the second member comprises a body portion shaped to locate in and line the recess.

9. A refrigerated vehicle or container as claimed in claim 8 when dependant on any one of claims 2 to 7 wherein the second member includes a pair of flanges attached to or integral with the body portion, the flanges being secured between the insulative material surrounding the recess and the skin.

10. A method of providing load restraint member attachment points on part of a refrigerated vehicle or container, which part is formed from one or more panels of insulative material, by attaching an anchorage means thereto, the anchorage means comprising a first member to which load restraint members may be attached and a second member, comprising forming a recess in the panel(s), securing the second member to the panel(s) in the region of the recess with adhesive, securing a skin to the panel(s) around the recess with adhesive, securing the first member to the second member and/or the skin across the recess with adhesive, supporting the panel(s) on a table, covering the panel(s) with a blanket and applying a vacuum below the blanket.

Fig.1.

Fig.2.

Fig.3.

Fig.5.

Fig.4.

EP 0 424 083 A1

European
Patent Office

**EUROPEAN SEARCH
REPORT**

Application Number

**EP 90 31 1310**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 200 601   (YORK TRAILER) <br> * the whole document * <br> — — — | 1,2,10 | B 60 P 3/20 <br> B 60 P 7/08 |
| A | DE-A-2 227 132   (ACKERMANN FAHRZEUGBAU) <br> * claims 1, 2; figures 1-3 * <br> — — — | 1,5,9 | |
| A | DE-U-7 625 666   (SPIER & SOHN) <br> * claims 1, 2; figures 1-4 * <br> — — — | 1,5 | |
| A | US-A-3 049 368   (JANSEN) <br> * figures 1-6 * <br> — — — | 6 | |
| A | DE-A-3 522 393   (SOMMER-FAHRZEUGBAU) <br> — — — — — | | |

TECHNICAL FIELDS
SEARCHED (Int. Cl.5)

B 60 P

The present search report has been drawn up for all claims

| Place of search | Date of completion of search | Examiner |
|---|---|---|
| Berlin | 11 January 91 | LUDWIG H J |

CATEGORY OF CITED DOCUMENTS

X : particularly relevant if taken alone
Y : particularly relevant if combined with another
document of the same category
A : technological background
O : non-written disclosure
P : intermediate document
T : theory or principle underlying the invention

E : earlier patent document, but published on, or after
the filing date
D : document cited in the application
L : document cited for other reasons

............................................

& : member of the same patent family, corresponding
document